# EUROPEAN PATENT APPLICATION

(11) **EP 4 401 419 A1**
(43) Date of publication of application: **17.07.2024**
(21) Application number: 22862587.7
(22) Date of filing: 19.03.2022
(51) Int. Cl.: H04Q 11/00

(54) **BANDWIDTH ALLOCATION METHOD AND APPARATUS, AND AUTHENTICATION METHOD AND SYSTEM FOR HOME NETWORK ONU**

(30) Priority: 06.09.2021 CN 202111040529
(71) Applicant: ZTE Corporation, Shenzhen, Guangdong 518057 (CN)
(72) Inventor: ZHANG, Weiliang, Shenzhen, Guangdong 518057 (CN)
(74) Representative: Deambrogi, Edgardo
(86) International application number: PCT/CN2022/081853
(87) International publication number: WO 2023/029439

(57) **Abstract**

The present invention provides a bandwidth allocation method and apparatus, and an authentication method and system for a home network ONU. The bandwidth allocation method comprises: an access bandwidth is allocated for a home network ONU by an access network OLT, wherein the access bandwidth is reserved by an integrated device, and the integrated device is configured to allocate an uplink bandwidth of the home network except the access bandwidth.

## Description

### Cross-Reference to Related Application

The present invention claims priority to Chinese Patent Application No. 202111040529.2, filed to the China National Intellectual Property Administration on September 6, 2021 and entitled "Bandwidth Allocation Method and Apparatus, and Authentication Method and System for Home Network ONU", which is incorporated herein by reference in its entirety.

### Technical Field

The present invention relates to the field of communications, and in particular to a bandwidth allocation method and apparatus, and an authentication method and system for a home network ONU.

### Background

A Passive Optical Network (PON) is a point-to-multipoint network topology, and has passive characteristics of an Optical Distribution Network (ODN); and a networking technology for applying the passive optical network to a home network belongs to a solution which has not been realized yet but requires focused research. However, a home network PON is a network provided inside a user home; in addition to achieving interconnection inside a home, a traditional telecommunication network also needs to be accessed. Therefore, allowing for a user to enjoy a high-quality access service on the basis of the traditional telecommunication network is also an important target of the home network PON. In order to achieve this target, the home network PON needs to be combined with a currently-popular access network PON. For how to integrate the home network PON and the access network PON organically, no explicit solution has been provided in the related art.

Therefore, it is necessary to improve the related art to overcome the defect in the related art.

### Summary

Embodiments of the present invention provide a bandwidth allocation method and apparatus, and an authentication method and system for a home network ONU, so as to at least solve the problem in the related art of how to integrate a home network and an access network.

According to an embodiment of the present invention, provided is an authentication system for a home network ONU, including: an access network OLT, an integrated device and a home network ONU, wherein the home network ONU is configured to access the access network OLT via the integrated device to complete an access service, and is further configured to establish a home network with the integrated device to realize a service inside the home network; and the integrated device includes: an access network ONU and a home network OLT.

According to another embodiment of the present invention, further provided is an authentication method for a home network ONU, including: the home network ONU is authenticated at least by one of the following manners: a serial number SN sent by the home network ONU is received by an integrated device, the serial number SN is sent to an access network OLT, and the access network OLT authenticates the home network ONU; the serial number SN and a user registration ID of the home network ONU are acquired by the integrated device, the serial number SN and the user registration ID of the home network ONU are sent to the access network OLT, and the access network OLT authenticates the home network ONU; and a slice channel between the home network ONU and the access network OLT is established by the integrated device, and the access network OLT authenticates the home network ONU by the slice channel; wherein the integrated device includes: an access network ONU and a home network OLT.

According to another embodiment of the present invention, further provided is a bandwidth allocation method, including: an access bandwidth is allocated for a home network ONU by an access network OLT, wherein the access bandwidth is reserved by an integrated device, and the integrated device is configured to allocate an uplink bandwidth of the home network except the access bandwidth.

According to another embodiment of the present invention, further provided is an authentication apparatus for a home network ONU, including: an authentication module, configured to authenticate the home network ONU at least by one of the following manners: a serial number SN sent by the home network ONU is received by an integrated device, the serial number SN is sent to an access network OLT, and the access network OLT authenticates the home network ONU; the serial number SN and a user registration ID of the home network ONU are acquired by the integrated device, the serial number SN and the user registration ID of the home network ONU are sent to the access network OLT, and the access network OLT authenticates the home network ONU; and a slice channel between the home network ONU and the access network OLT is established by the integrated device, and the access network OLT authenticates the home network ONU by the slice channel; wherein the integrated device includes: an access network ONU and a home network OLT.

According to another embodiment of the present invention, further provided is a bandwidth allocation apparatus, including: an allocation module, configured to allocate an access bandwidth for a home network ONU by an access network OLT, wherein the access bandwidth is reserved by an integrated device, and the integrated device is configured to allocate an uplink bandwidth of the home network except the access bandwidth.

According to still another embodiment of the present invention, further provided is a computer-readable storage medium, the computer-readable storage medium storing a computer program, wherein the computer program is configured to execute, when executed by a processor, the authentication method for a home network ONU as described above.

According to still another embodiment of the present invention, further provided is an electronic apparatus, including a memory, a processor and a computer program stored in the memory and executable on the processor, wherein the processor executes the described authentication method for a home network ONU by the computer program.

By the present invention, provided is an authentication system for a home network ONU, including: an access network OLT, an integrated device and a home network ONU, wherein the home network ONU is configured to access the access network OLT via the integrated device to complete an access service, and is further configured to establish a home network with the integrated device to realize a service inside the home network; and the integrated device includes: an access network ONU and a home network OLT. By the technical solution above, a high-quality access service of a home network can be realized.

### Brief Description of the Drawings

The drawings illustrated herein are used for providing further understanding of the present invention and constitute a part of some embodiments of the present invention, and the illustrative embodiments of the present invention and illustrations thereof are used for explaining the present invention, rather than constitute inappropriate limitation on the present invention. In the drawings:
Fig. 1 is a structural block diagram of hardware of a computer terminal for an authentication method for a home network ONU according to embodiments of the present invention;
Fig. 2 is a flowchart of an authentication method for a home network ONU according to embodiments of the present invention;
Fig. 3 is a flowchart of a bandwidth allocation method according to embodiments of the present invention;
Fig. 4 is a schematic diagram of a passive optical network according to embodiments of the present invention;
Fig. 5 is a schematic diagram of an initiation process of a home network OLT according to embodiments of the present invention;
Fig. 6 is a schematic diagram of an initiation process of a home network ONU according to embodiments of the present invention;
Fig. 7 is a structural block diagram of an authentication apparatus for a home network ONU according to embodiments of the present invention;
Fig. 8 is a structural block diagram of a bandwidth allocation apparatus according to embodiments of the present invention; and
Fig. 9 is a schematic diagram of an authentication system for a home network ONU according to embodiments of the present invention.

### Detailed Description of the Embodiments

In order to enable a person skilled in the art to understand the solutions of the present invention better, hereinafter, the technical solutions in the embodiments of the present invention will be described clearly and thoroughly with reference to the accompanying drawings of embodiments of the present invention. Obviously, the embodiments as described are only some of embodiments of the present invention, and are not all the embodiments. On the basis of the embodiments in the present invention, all other embodiments obtained by a person of ordinary skill in the art without any inventive effort shall all fall within the scope of protection of the present invention.

It is to be noted that the terms "first", "second", etc. in the description, claims and drawings of the present invention are used to distinguish similar objects, and are not necessarily used to describe a specific sequence or a precedence order. It should be understood that the data so used may be interchanged where appropriate so that embodiments of the present invention described herein may be implemented in sequences other than those illustrated or described herein. In should be noted that terms "include" and "have" and any variations thereof are intended to cover a non-exclusive inclusion, for example, a process, method, system, product or device which includes a series of steps or units is not necessarily limited to those steps or units that are clearly listed, but may include other steps or units that are not clearly listed or inherent to these process, method, product or device.

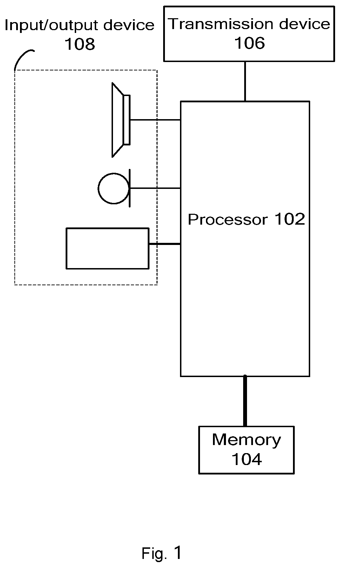

Method embodiments provided in embodiments of the present invention may be executed in a computer terminal or a similar computing apparatus. Taking running the method on a computer terminal as an example, Fig. 1 is a structural block diagram of hardware of a computer terminal for an authentication method for a home network ONU (Optical Network Unit) according to embodiments of the present invention. As shown in Fig. 1, the computer terminal may include one or more (only one processor is shown in Fig. 1) processors 102 (the processors 102 may include but are not limited to a Microprocessor Unit (MPU for short) or a Programmable logic device (PLD for short)), and a memory 104 configured to store data. In some exemplary embodiments, the computer terminal can further include a transmission device 106 and an input/output device 108 for communication functions. A person of ordinary skill in the art would understand that the structure shown in Fig. 1 is merely exemplary, and does not limit the structure of the computer terminal. For example, the computer terminal may also include more or fewer assemblies than those shown in Fig. 1, or have equal functions as those shown in Fig. 1 or different configurations having more functions than those as shown in Fig. 1.

The memory 104 may be used for storing a computer program, for example, a software program and module of application software, such as a computer program corresponding to the authentication method for a home network ONU in embodiments of the present invention; and the processor 102 executes various functional applications and data processing by running the computer program stored in the memory 104, i.e. implementing the described method. The memory 104 may include a high-speed random access memory, and may also include a non-transitory memory, such as one or more magnetic storage apparatuses, flash memories or other non-transitory solid-state memories. In some examples, the memory 104 may further include memories remotely arranged with respect to the processors 102, and these remote memories may be connected to the computer terminal via a network. Examples of the network include, but are not limited to the Internet, an intranet, a local area network, a mobile communication network and combinations thereof.

The transmission apparatus 106 is configured to receive or send data via a network. Specific examples of the network may include a wireless network provided by a communication provider of the computer terminal. In one example, the transmission apparatus 106 includes a network adapter (Network Interface Controller, NIC for short) which may be connected to other network devices by means of a base station, thereby being able to communicate with the Internet. In one example, the transmission apparatus 106 may be a Radio Frequency (RF for short) module which is configured to communicate with the Internet in a wireless manner.

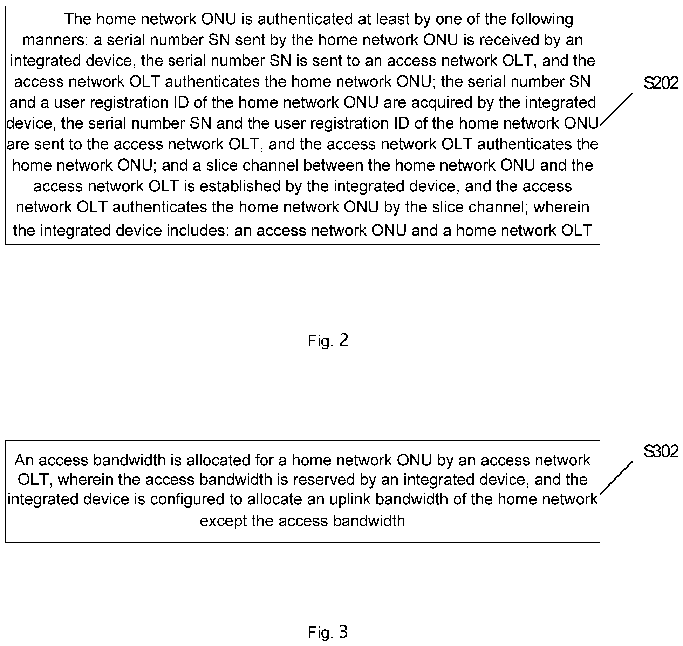

The present embodiment provides an authentication method for a home network ONU. Fig. 2 is a flowchart of the authentication method for a home network ONU according to embodiments of the present invention. As shown in Fig. 2, the flow includes the following step:
step S202, the home network ONU is authenticated at least by one of the following manners:
a serial number SN sent by the home network ONU is received by an integrated device, the serial number SN is sent to an access network OLT (Optical Line Terminal), and the access network OLT authenticates the home network ONU;
the serial number SN and a user registration ID (Identification) of the home network ONU are acquired by the integrated device, the serial number SN and the user registration ID of the home network ONU are sent to the access network OLT, and the access network OLT authenticates the home network ONU; and
a slice channel between the home network ONU and the access network OLT is established by the integrated device, and the access network OLT authenticates the home network ONU by the slice channel; wherein
the integrated device includes: an access network ONU and a home network OLT.

By the described step, the home network ONU is authenticated at least by one of the following manners: a serial number SN sent by the home network ONU is received by an integrated device, the serial number SN is sent to an access network OLT for authenticating the home network ONU; the serial number SN and a user registration ID of the home network ONU are acquired by the integrated device, the serial number SN and the user registration ID of the home network ONU are sent to the access network OLT for authenticating the home network ONU; and a slice channel between the home network ONU and the access network OLT is established by the integrated device, and the access network OLT authenticates the home network ONU by the slice channel; wherein the integrated device includes: an access network ONU and a home network OLT, which can realize a high-quality access service of a home network.

In an embodiment, on the basis of the authentication method in step S202, embodiments of the present invention further provide an optional implementation of step S202. In an embodiment, provided is a technical solution in which the serial number SN and the user registration ID of the home network ONU are acquired by the integrated device, the serial number SN and the user registration ID of the home network ONU are sent to the access network OLT, and the access network OLT authenticates the home network ONU, which is specifically: in cases where the home network OLT detects that the home network ONU has an access slice configuration, the home network OLT sends the serial number SN and the user registration ID of the home network ONU to the access network OLT by the access network ONU, and the access network OLT authenticates the home network ONU; or an access request carrying the serial number SN is initiated by the home ONU, the serial number SN is sent to the access network OLT, and the access network OLT authenticates the home network ONU.

Fig. 3 is a flowchart of a bandwidth allocation method according to embodiments of the present invention. As shown in Fig. 3, the method includes the following step:
step S302, an access bandwidth is allocated for a home network ONU by an access network OLT, wherein the access bandwidth is reserved by an integrated device, and the integrated device is configured to allocate an uplink bandwidth of the home network except the access bandwidth.

In an embodiment, a local bandwidth of which the time duration is consistent with that of a slice bandwidth may be reserved for the home network ONU by the integrated device, and the local bandwidth is used as the allocated access bandwidth.

It can be understood that, in an access network PON, an access network OLT allocates an uplink bandwidth to an access network ONU; and similarly, in a home network PON, a home network OLT also allocates an uplink bandwidth to the home network ONU.

In the related art, the access network PON and the home network PON operate as two independent networks. Generally, when uplink data sent by the home network ONU by means of the uplink bandwidth arrives at the home network OLT and is forwarded to the access network ONU, the access network ONU does not obtain the uplink bandwidth allocated by the access network OLT, so that the uplink data is cached in the access network ONU, thereby causing a time delay; in addition, as the uplink bandwidths allocated to the access network PON and the home network PON are inconsistent, and different uplink data sent by the home network ONU has different cache time in the access network ONU, time delay changes and the uplink data is unstable.

The access network ONU and the home network OLT are made into an integrated device, and allocation of uplink bandwidths to the access network PON and the home network PON can be coordinated. When the access network OLT allocates an uplink bandwidth to the home network ONU, first, an uplink bandwidth is allocated to the access network ONU in the access network PON, and then, in the integrated device, the home network OLT correspondingly allocates an uplink bandwidth to the home network ONU, wherein the bandwidths of the two are the same, and are in continuation in time sequence. When the uplink data sent by the home network ONU through the uplink bandwidth allocated by the home network OLT reaches the home network OLT and reaches the access network ONU, the uplink data sent by the home network ONU can be further forwarded to the access network OLT by just using the uplink bandwidth allocated by the access network OLT to the access network ONU. In this way, the uplink data sent by the home network ONU can be sent to the access network OLT without being cached.

In the embodiments of the present invention, the uplink bandwidth allocated by the access network OLT to the access network ONU and the uplink bandwidth allocated by the home network OLT to the home network ONU, which have the same bandwidth and are in continuation in time sequence, are referred to as slice bandwidths. By using the slice bandwidths, a channel for forwarding uplink data without caching is formed in the integrated device, and is a slice channel.

Certainly, in specific implementations, it may be difficult to achieve no-cache forwarding, but cache for a certain period of time may be allowed, the cache time may not exceed a certain preset value, and may also be a certain fixed value. The uplink bandwidths allocated in the access network PON and the home network PON may be different, as long as they can satisfy the cache time; and the described method can be understood as the slice bandwidths and the slice channel as set forth in the embodiments of the present invention.

Certainly, a similar situation applies to a downlink direction: the access network OLT allocates a downlink bandwidth to the access network ONU, and the home network OLT in the integrated device correspondingly allocates a downlink bandwidth to the home network ONU, wherein the bandwidths of the two match each other, and are in continuation in time sequence, such that downlink data sent by the access network OLT is forwarded to the home network ONU in the integrated device without cache or without exceeding a maximum cache time or a fixed cache time.

In an embodiment, the technical solution in which an access bandwidth is allocated for the home network ONU by the access network OLT provided in the embodiment of the present invention is: an access request initiated by the home network ONU is received by the access network OLT; and in response to the access request, the allocated access bandwidth is sent to the home network ONU.

In an embodiment, the technical solution in which the allocated access bandwidth is sent to the home network ONU includes: the accessed access bandwidth is sent to the home ONU by the access network ONU and the home network OLT.

By the technical solutions in the described steps, intra-home interconnection can be realized without occupying the bandwidth of the access network, and high-efficiency and high-quality access can also be realized.

Obviously, the embodiments as described above are only some of the embodiments of the present invention, and are not all the embodiments. In order to better understand the described method, the described process will be described below in conjunction with the embodiments, but it is not used to limit the technical solutions of the embodiments of the present invention, and In an embodiment:
the authentication method for a home network ONU provided in the embodiments of the present invention can realize a passive optical network in which an access network and a home network are integrated, and a home network PON can be used as a constituent part of the home network for realizing intra-home interconnection, and can also be used as an extension part of the access network PON for realizing a high-quality access service.

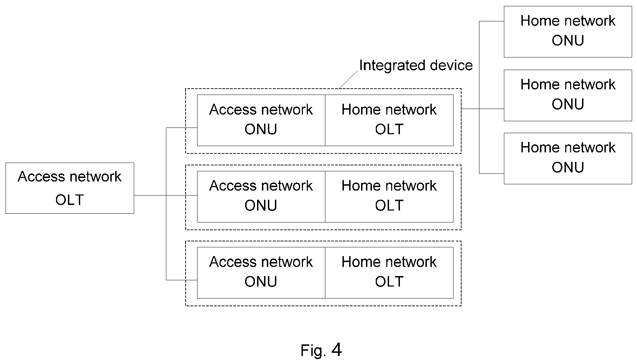

Fig. 4 is a schematic diagram of a passive optical network according to embodiments of the present invention. As shown in Fig. 4, upstream and downstream of the integrated device integrating the home network OLT and the access network ONU are both optical ports (short for optical fiber interface), and the integrated device is connected to the access network OLT and the home network ONU respectively by the optical ports.

The first integrated device is used as a master for interconnection inside the home network, and is used as a switching point for sharing a service among the intra-home ONU terminals; the other is used as an upstream device for accessing an access service by terminals inside the home network, and is a relay point providing a high-quality access service; and the third one is used as a terminal device of the access network, and performs necessary management information and basic service interaction with the access network OLT.

In order to support low delay and support quality of service, the home network ONU can pass through the integrated device to interact with the access network OLT, the home network ONU needs to be authenticated by the access network OLT, and can accept an access network service, and can ensure the QoS (Quality of Service), and the uplink bandwidth of the home network ONU is allocated by the access network OLT. That is to say, the home network OLT reserves an uplink bandwidth for the home network ONU on the basis of the uplink bandwidth allocation of the access network OLT, and allocates the remaining bandwidth to other home network ONUs after reserving the uplink bandwidth.

Authentication of the home network ONU generally needs to be completed by the integrated device, and the integrated device is required to have completed the authentication in advance. For example, an SN of the home network ONU is sent to the integrated device, and the integrated device then sends same to the access network OLT for authentication; or the integrated device sends the SN and the user registration ID of the home network together to the access network OLT for authentication; or the home network ONU establishes a slice channel with the access network OLT through the integrated device, and the home network ONU directly performs an interactive authentication process with the access network OLT.

After the authentication of the home network ONU is completed, the access bandwidth thereof is allocated by the access network OLT; the uplink bandwidth allocated by the access network OLT to the home network ONU needs to be parsed and reserved by the integrated device; and except the bandwidth, the integrated device allocates the uplink bandwidth inside the home network PON.

By the integrated device and the corresponding authentication and bandwidth allocation mechanism in the embodiments of the present invention, intra-home interconnection can be realized without occupying the bandwidth of the access network, and high-efficiency and high-quality access can also be realized.

The manner for authenticating the home network ONU by the access network may include the following implementations:
1. When the access network OLT allocates a bandwidth to the home network ONU, the integrated device reserves a slice bandwidth and establishes a slice channel.
   Reserving a slice bandwidth and establishing a slice channel in the embodiments of the present invention may be understood as use examples of the slice bandwidth in the described embodiments, which will not be limited in the embodiments of the present invention.
2. The home network ONU completes activation registration with the home network OLT in the home network PON, and authentication by the access network PON is also required; the authentication may be completed by the home network OLT, and may also be initiated by the home network ONU.

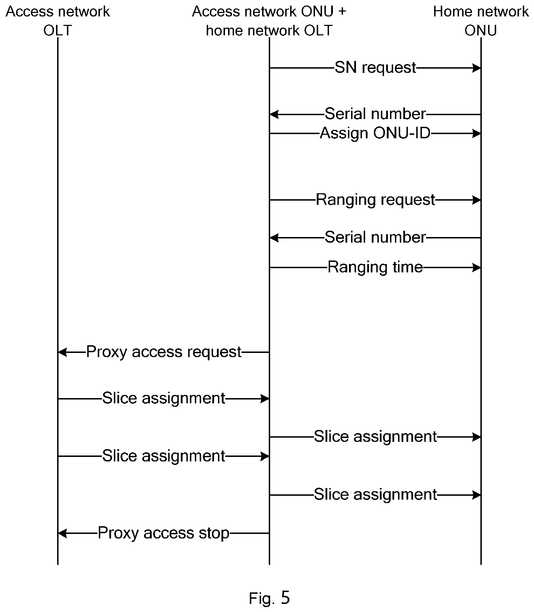

Fig. 5 is a schematic diagram of an initiation process of the home network OLT according to embodiments of the present invention. A path in the initiation process of the home network OLT is: home network OLT → access network ONU → access network OLT, and the home network OLT actively initiates the authentication of the home network ONU and applies for a slice bandwidth of the access network PON, and locally reserves a local bandwidth of which the time duration is consistent with that of a slice bandwidth, and allocates the local bandwidth to the home network ONU. Except the locally reserved bandwidth, the remaining local bandwidth is used for sharing a service between home network ONUs or for other non-low-delay access services, and this situation is applicable to the case that the slice of the home network ONU is configured.

As shown in Fig. 5, the home network ONU completes the activation registration with the home network OLT according to a standard procedure, and the home network OLT initiates a Proxy access request to the access network OLT by the access network ONU when learning, according to configuration, that the home network ONU which has just completed the activation registration has an access slice configuration, wherein the proxy access request carries information related to the home network ONU and user access, such as an ONU-ID, a serial number, a registration ID and a bandwidth requirement; the home network ONU initiates an access request, and the access network OLT sends, according to the request, Slice assignment to the home network ONU to allocate the access bandwidth, wherein the slice assignment carries information related to the ONU and the user access and a bandwidth allocation result; and the Slice assignment first reaches the access network ONU, and then is forwarded to the home network OLT; and after learning the Slice assignment, the home network OLT performs local bandwidth configuration, and then transparently forwards same to the home network ONU.

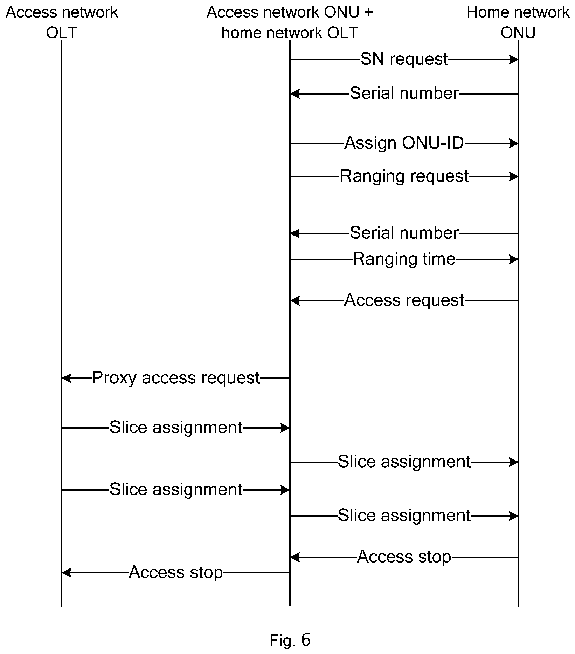

Fig. 6 is a schematic diagram of an initiation process of the home network ONU according to embodiments of the present invention. A path in the initiation process of the home network ONU is: home network ONU → home network OLT → access network ONU → access network OLT. The home network ONU initiates an authentication and slice bandwidth request, and the home network OLT applies, by the access network ONU, to the access network OLT for authentication and slice bandwidth of the access network PON, and locally reserves a local bandwidth of which the time duration is consistent with that of a slice bandwidth, and allocates the local bandwidth to the home network ONU. Except the locally reserved bandwidth, the remaining local bandwidth is used for sharing a service between home network ONUs or for other non-low-delay access services, and this situation is applicable to the case that the slice of the home network ONU is dynamically generated.

As shown in Fig. 6, the home network ONU completes the activation registration with the home network OLT according to a standard procedure, and the home network ONU initiates an Access request, wherein the access request carries information related to the home network ONU and user access, such as an Assign ONU-ID, a sequence number SN, a registration ID and a bandwidth requirement Ranging request, etc.; the home network OLT initiates a Proxy access request to the access network OLT by the access network ONU, wherein the proxy access request carries the ONU in the access request and the information related to the user access and the bandwidth requirement Ranging request; a proxy home network ONU initiates a Proxy access request, and the access network OLT sends, according to the proxy access request, Slice Assignment to the home network ONU to allocate the access bandwidth, wherein the slice assignment carries information related to the home network ONU and the user and a bandwidth allocation result; and the Slice assignment first reaches the access network ONU, and then is forwarded to the home network OLT; and after learning the Slice assignment, the home network OLT performs local bandwidth configuration, and then transparently forwards same to the home network ONU.

The technical solution initiated by the home network OLT in the embodiments of the present invention is mainly pre-configured on the basis of the access function of the home network ONU, although it cannot be adjusted flexibly, the implementation is simple, and the stability of QoS is high. However, in the technical solution initiated by the home network ONU of the embodiment in Fig. 6, the access function thereof is flexibly adjusted, and can be adjusted according to the change of a user-side service, and can also be adjusted according to the bandwidth situation of the access network. For example, in cases where all home network ONUs are accessed, the home network ONU, to which a user terminal is connected, changes correspondingly along with the movement of the user terminal in the home, which is flexible but has certain requirements on the adaptive capability to the access network. After the authentication is completed, the access network OLT can directly allocate a bandwidth to the home network ONU, and the access network ONU and the home network OLT relay the bandwidth allocation, so that the home network ONU has better QoS for the access network service. This may be understood as a slice function of the home network PON.

In addition, the access network OLT can always allocate the minimum bandwidth to the home network ONU for authentication and bandwidth requests, and the home network ONU directly applies, by the minimum bandwidth, to the access network OLT for authentication and bandwidth; and the home network OLT only needs to reserve local bandwidth allocation according to the bandwidth allocation of the access network OLT, and the remaining local bandwidth except the reserved local bandwidth may be allocated to local shared services or other non-low-delay services. According to the embodiments of the present invention, by slice reservation process of the access network and the home network PON, a bandwidth allocation function of the home network OLT can be effectively reduced, and a local cache requirement of the home network OLT is reduced, thereby providing better QoS for low-delay services.

From the description of the described embodiments, a person skilled in the art would have been able to clearly understand that the methods in the described embodiments may be implemented by using software and necessary general hardware platforms, and of course may also be implemented using hardware, but in many cases, the former is a better embodiment. On the basis of such understanding, the portion of the technical solution of the present invention that contributes in essence or to the related art may be embodied in the form of a software product stored in a storage medium (such as an ROM/RAM, a magnetic disk and an optical disc); and the storage medium comprises several instructions to cause a terminal device (which may be a mobile phone, a computer, a server or a network device, etc.) to perform the method according to the various embodiments of the present invention.

The present embodiment further provides an authentication apparatus for a home network ONU, the apparatus is configured to implement the described embodiments and preferred embodiments, and what has been described will not be repeated again. As used below, the term "module" may implement a combination of software and/or hardware of predetermined functions. Although the device described in the following embodiments is preferably implemented in software, implementation in hardware or a combination of software and hardware is also possible and could have been conceived.

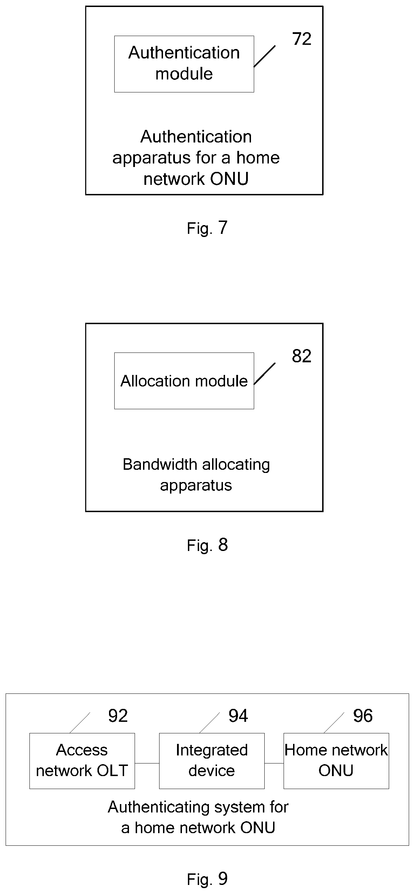

Fig. 7 is a structural block diagram of an authentication apparatus for a home network ONU according to embodiments of the present invention. As shown in Fig. 7, the authentication apparatus for a home network ONU includes:
an authentication module 72, configured to authenticate the home network ONU at least by one of the following manners: a serial number SN sent by the home network ONU is received by an integrated device, the serial number SN is sent to an access network OLT, and the access network OLT authenticates the home network ONU; the serial number SN and a user registration ID of the home network ONU are acquired by the integrated device, the serial number SN and the user registration ID of the home network ONU are sent to the access network OLT, and the access network OLT authenticates the home network ONU; and a slice channel between the home network ONU and the access network OLT is established by the integrated device, and the access network OLT authenticates the home network ONU by the slice channel; wherein the integrated device includes: an access network ONU and a home network OLT.

By means of the present invention, the home network ONU is authenticated at least by one of the manners above, intra-home interconnection can be realized without occupying the bandwidth of the access network, and high-efficiency and high-quality access can also be realized.

Fig. 8 is a structural block diagram of a bandwidth allocation apparatus according to embodiments of the present invention. As shown in Fig. 8, the bandwidth allocation apparatus includes:
an allocation module 82, configured to allocate an access bandwidth for a home network ONU by an access network OLT, wherein the access bandwidth is reserved by an integrated device, and the integrated device is configured to allocate an uplink bandwidth of the home network except the access bandwidth.

By means of the present invention, the home network ONU is authenticated at least by one of the manners above, intra-home interconnection can be realized without occupying the bandwidth of the access network, and high-efficiency and high-quality access can also be realized.

Fig. 9 is a schematic diagram of an authentication system for a home network ONU according to embodiments of the present invention. As shown in Fig. 9, the system includes: an access network OLT 92, an integrated device 94 and a home network ONU 96, wherein the home network ONU 96 is configured to access the access network OLT 92 via the integrated device to complete an access service, and is further configured to establish a home network with the integrated device 94 to realize a service inside the home network; and the integrated device 94 includes: an access network ONU and a home network OLT.

In an embodiment, the integrated device is further configured to receive a serial number SN sent by the home network ONU, and send the serial number SN to the access network OLT; and the access network OLT is further configured to authenticate the home network ONU.

In an embodiment, the integrated device is further configured to acquire the serial number SN and a user registration ID of the home network ONU, and send the serial number SN and the user registration ID of the home network ONU to the access network OLT; and the access network OLT is further configured to authenticate the home network ONU.

In an embodiment, the integrated device is further configured to reserve a slice bandwidth, and establish a slice channel between the home network ONU and the access network OLT; and the access network OLT is further configured to authenticate the home network ONU by the slice channel.

In an embodiment, the access network OLT is further configured to allocate an access bandwidth for the home network ONU, wherein the access bandwidth is reserved by the integrated device to obtain a slice bandwidth, and the integrated device is configured to allocate an uplink bandwidth of the home network except the slice bandwidth.

In an embodiment, the integrated device is further configured to reserve, for the home network ONU, a local bandwidth of which the time duration is consistent with that of the access bandwidth and the time sequence is in continuation with the access bandwidth, and use the local bandwidth as the allocated access bandwidth.

In some exemplary embodiments, the computer-readable storage medium above may include, but is not limited to: various media that can store a computer program, such as a USB flash drive, a Read-Only Memory (ROM for short), a Random Access Memory (RAM for short), a removable hard disk, a magnetic disk, or an optical disc.

For specific examples in the present embodiment, reference can be made to the examples described in the described embodiments and exemplary embodiments, and thus they will not be repeated again in the present embodiment.

Embodiments of the present invention further provide an electronic apparatus, including a memory and a processor; wherein the memory stores a computer program, and the processor is configured to execute the computer program to perform the steps in any one of the method embodiments.

In an embodiment, in the present embodiment, the processor may be configured to execute the following step by means of the computer program:
S1, the home network ONU is authenticated at least by one of the following manners:
a serial number SN sent by the home network ONU is received by an integrated device, the serial number SN is sent to an access network OLT, and the access network OLT authenticates the home network ONU;
the serial number SN and a user registration ID of the home network ONU are acquired by the integrated device, the serial number SN and the user registration ID of the home network ONU are sent to the access network OLT, and the access network OLT authenticates the home network ONU; and
a slice channel between the home network ONU and the access network OLT is established by the integrated device, and the access network OLT authenticates the home network ONU by the slice channel; wherein
the integrated device includes: an access network ONU and a home network OLT.

In other optional embodiments, the processor may be further configured to execute the following step by the computer program:
S1, an access bandwidth is allocated for a home network ONU by an access network OLT, wherein the access bandwidth is reserved by an integrated device, and the integrated device is configured to allocate an uplink bandwidth of the home network except the access bandwidth.

In some exemplary embodiments, the electronic apparatus can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment

It is apparent that a person skilled in the art shall understand that all of the described modules or steps in the present invention may be implemented by using a general computing apparatus, may be centralized on a single computing apparatus or may be distributed on a network composed of multiple computing apparatuses, and may be implemented by using executable program codes of the computing apparatus. Thus, the program codes may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present invention is not limited to any specific hardware and software combinations.

The content above merely relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

## Claims

1. A method for allocating a bandwidth, comprising:
allocating, by an access network OLT, an access bandwidth for a home network ONU, wherein the access bandwidth is reserved by an integrated device, and the integrated device is configured to allocate an uplink bandwidth of the home network except the access bandwidth.

2. The method for allocating a bandwidth according to claim 1, wherein the method further comprises:
reserving, by the integrated device, a local bandwidth of which the time duration is consistent with that of the access bandwidth and the time sequence is in continuation with the access bandwidth for the home network ONU, and using the local bandwidth as the allocated access bandwidth.

3. The method for allocating a bandwidth according to claim 2, wherein allocating, by the access network OLT, the access bandwidth for the home network ONU, comprises:
receiving, by the access network OLT, an access request initiated by the home network ONU; and
sending the allocated access bandwidth to the home network ONU in response to the access request.

4. The method for allocating a bandwidth according to claim 2, wherein sending the allocated access bandwidth to the home network ONU comprises:
sending the access bandwidth to the home network ONU through the access network ONU and the home network OLT.

5. An authentication method for a home network ONU, comprising:
authenticating the home network ONU at least by one of the following manners:
receiving, by an integrated device, a serial number SN sent by the home network ONU, sending the serial number SN to an access network OLT, and the access network OLT authenticating the home network ONU;
acquiring the serial number SN and a user registration ID of the home network ONU by the integrated device, sending the serial number SN and the user registration ID of the home network ONU to the access network OLT, and the access network OLT authenticating the home network ONU; and
establishing a slice channel between the home network ONU and the access network OLT by the integrated device, and the access network OLT authenticating the home network ONU by the slice channel; wherein
the integrated device includes: an access network ONU and a home network OLT.

6. The authentication method for a home network ONU according to claim 5, wherein acquiring the serial number SN and the user registration ID of the home network ONU by the integrated device, sending the serial number SN and the user registration ID of the home network ONU to the access network OLT, and the access network OLT authenticating the home network ONU, comprises:
in a case that the home network OLT detects that the home network ONU has an access slice configuration, sending, by the home network OLT, the serial number SN and the user registration ID of the home network ONU to the access network OLT by the access network ONU, and the access network OLT authenticating the home network ONU; or
initiating, by the home network ONU, an access request carrying the serial number SN, sending the serial number SN to the access network OLT, and the access network OLT authenticating the home network ONU.

7. An authentication system for a home network ONU, comprising:
an access network OLT, an integrated device and a home network ONU, wherein
the home network ONU is configured to access the access network OLT via the integrated device to complete an access service, and is further configured to establish a home network with the integrated device to realize a service inside the home network; and the integrated device includes: an access network ONU and a home network OLT.

8. The authentication system for a home network ONU according to claim 7, wherein
the integrated device is further configured to receive a serial number SN sent by the home network ONU, and send the serial number SN to the access network OLT; and
the access network OLT is further configured to authenticate the home network ONU.

9. The authentication system for a home network ONU according to claim 7, wherein
the integrated device is further configured to acquire the serial number SN and a user registration ID of the home network ONU, and send the serial number SN and the user registration ID of the home network ONU to the access network OLT; and
the access network OLT is further configured to authenticate the home network ONU.

10. The authentication system for a home network ONU according to claim 7, wherein
the integrated device is further configured to reserve a slice bandwidth, and establish a slice channel between the home network ONU and the access network OLT; and
the access network OLT is further configured to authenticate the home network ONU by the slice channel.

11. The authentication system for a home network ONU according to claim 7, wherein
the access network OLT is further configured to allocate an access bandwidth for the home network ONU, wherein the access bandwidth is reserved by the integrated device to obtain a slice bandwidth, and the integrated device is configured to allocate an uplink bandwidth of the home network except the slice bandwidth.

12. The authentication system for a home network ONU according to claim 11, wherein
the integrated device is further configured to reserve, for the home network ONU, a local bandwidth of which the time duration is consistent with that of the access bandwidth and the time sequence is in continuation with the access bandwidth, and use the local bandwidth as the allocated access bandwidth.

13. An apparatus for allocating a bandwidth, comprising:
an allocation module, configured to allocate an access bandwidth for a home network ONU by an access network OLT, wherein the access bandwidth is reserved by an integrated device, and the integrated device is configured to allocate an uplink bandwidth of the home network except the access bandwidth.

14. An authentication apparatus for a home network ONU, comprising:
an authentication module, configured to authenticate the home network ONU at least by one of the following manners:
receiving a serial number SN sent by the home network ONU by an integrated device, sending the serial number SN to an access network OLT, and the access network OLT authenticating the home network ONU;
acquiring the serial number SN and a user registration ID of the home network ONU by the integrated device, sending the serial number SN and the user registration ID of the home network ONU to the access network OLT, and the access network OLT authenticating the home network ONU; and
establishing a slice channel between the home network ONU and the access network OLT by the integrated device, and the access network OLT authenticating the home network ONU by the slice channel; wherein
the integrated device includes: an access network ONU and a home network OLT.

15. A computer readable storage medium, the computer readable storage medium storing a computer program, wherein the computer program is configured to execute, when executed by a processor, the method as claimed in any one of claims 1-4 or the method as claimed in any one of claims 5-6.

16. An electronic apparatus, comprising a memory and a processor, wherein the memory stores a computer program, and the processor is configured to execute the computer program to perform the method as claimed in any one of claims 1-4 or the method as claimed in any one of claims 5-6.
